# FASCICULE DE BREVET EUROPEEN

(11) **EP 2 322 379 B1**
(45) Date de publication et mention de la délivrance du brevet: **17.04.2013**
(21) Numéro de dépôt: 10188623.2
(22) Date de dépôt: 22.10.2010
(51) Int. Cl.: B60N 2/28

(54) **Siège auto pour enfant réversible, à passages de sangle uniques**
Umkehrbarer Kinderautositz mit Sitzgurtführungselementen
Reversible child seat with single seat belt passages

(30) Priorité: 16.11.2009 FR 0958055
(43) Date de publication de la demande: 18.05.2011
(73) Titulaire: Dorel France SA, 49309 Cholet Cedex (FR)
(72) Inventeur: Biaud, Richard, 49340, Trementines (FR)
(74) Mandataire: Bioret, Ludovic

(56) Documents cités:
- DE-U1-202009 008 293
- JP-A- 2003 252 094

## Description

### 1. Domaine de l'invention

Le domaine de l'invention est celui de la puériculture. Plus précisément l'invention concerne les sièges auto pour enfant, destinés à être installés sur les sièges de véhicules automobiles.

### 2. Art antérieur

On connaît plusieurs types de sièges auto pour enfants, ou sièges auto, qui sont adaptés aux différents âges de l'enfant.

Parmi ces sièges auto, on connaît notamment des sièges auto dits « groupe 0/0 + », qui sont adaptés et homologués pour les enfants depuis leur naissance jusqu'à ce qu'ils pèsent environ 13 kilos. Ces sièges auto sont prévus pour être installés dans une position « dos à la route », l'enfant étant tourné vers l'arrière du véhicule. Ils permettent que l'enfant soit installé dans une position semi-allongée, dans laquelle il est suffisamment incliné pour que le poids de sa tête ne soit pas supporté intégralement par son cou et son dos. En effet, le dos et le cou des enfants de cet âge ne sont pas encore suffisamment robustes pour supporter sur une longue durée le poids de la tête.

On connaît également des sièges auto dits « groupe 1 » qui sont adaptés et homologués pour les enfants pesant entre 9 et 18 kilos. Les enfants sont alors installés dans ces sièges auto en position assise, et généralement en position « face à la route », orienté vers l'avant du véhicule.

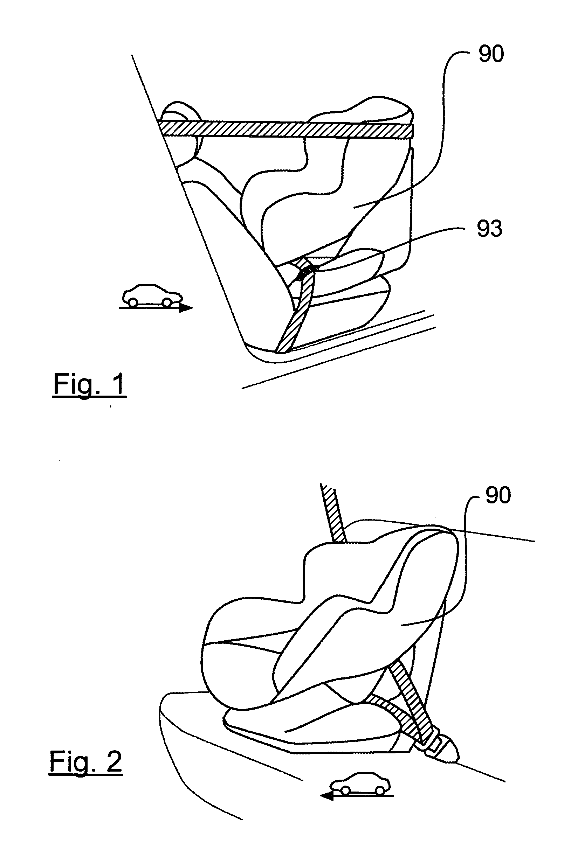

Certains sièges auto sont conçus pour être réversibles, c'est-à-dire pour pouvoir être utilisés comme des « groupes 0 + » ou des « groupes 1 » selon la position dans laquelle ils sont installés. Les figures 1 et 2 montrent un tel siège auto 90 connu pouvant être utilisé dans ces deux positions. De tels sièges auto peuvent ainsi être installés dans une position face à la route telle que l'enfant se trouve assis (position illustrée par la figure 2, correspondant à une utilisation en « groupe 1 ») et dans une position dos à la route, telle que le bébé se trouve en position semi-allongée (position illustrée par la figure 1, correspondant à une utilisation en « groupe 0+ »). Dans la position face à la route, l'inclinaison du siège est généralement réglable.

Les sièges auto sont souvent maintenus sur le siège ou la banquette du véhicule à l'aide d'une des ceintures de sécurité de ce dernier.

Comme le montrent les figures 1 et 2, il est alors nécessaire, sur de tels sièges auto pouvant prendre deux positions d'installation, de prévoir deux systèmes différents de fixation par les sangles de la ceinture de sécurité du véhicule, un premier système pour la fixation face à la route et un second système pour la fixation dos à la route. En effet, la longueur de sangle étant réglementaire, celle-ci doit être respectée dans les deux positions du siège auto (la position dos à la route étant connue comme fortement consommatrice de longueur de sangle).

De plus, les emplacements des passages de sangle sont définis pour garantir un maintien efficace, dans chaque position. On comprend, par exemple, que le passage de sangle ventrale 93 visible sur la figure 1 n'est utilisable qu'en position dos à la route.

Il existe donc un risque important d'erreur d'installation des sangles, par un utilisateur inexpérimenté ou inattentif. En effet, de nombreux passages de sangle sont présents, et seuls certains doivent être utilisés, selon la position du siège. Cependant, dans certains cas, il est possible de placer la sangle dans un passage de sangle inadéquat. Cette situation peut être très dangereuse, pour l'enfant. En effet, l'utilisateur peut avoir l'illusion que le siège est correctement maintenu, mais le moindre choc ou freinage brusque peut entraîner une projection du siège auto vers l'avant, le maintien par les sangles n'étant en fait pas assuré, et/ou celles-ci pouvant aisément sortir de leurs logements utilisés de façon erronée.

Un tel inconvénient apparaît notamment dans le document DE-U-20 2009 008 283 qui montre un siège dont le dossier comprend des passages de sangle à droite et à gauche, un seul de ces passages de sangle devant être utilisé lorsque le siège est en position face à la route.

Pour tenter de réduire ce risque, les fabricants de siège mettent en oeuvre un marquage, qui a d'ailleurs été normalisé en Europe (bleu pour la position dos à la route et rouge pour la position face à la route).

Cette solution est cependant du domaine de l'information, ou de l'intention, et ne permet pas d'empêcher une mauvaise utilisation (« misuse » en anglais) des passages de sangle, pouvant mettre en danger la santé, et la vie, de l'enfant.

Pour réduire ce problème, il a été proposé des embases fixes par rapport au siège du véhicule, le fauteuil du siège pour enfant étant réversible par rapport à l'embase. Ainsi, la solidarisation de l'embase ne pose pas de difficulté majeure, puisqu'elle n'a qu'une position, et donc qu'un mode de fonctionnement.

Cette approche est par exemple décrite dans les documents EP-830 972, DE-101 04 137, JP-62-129 945, JP-2000071829, EP-853018.

Cependant, cette solution n'est que partielle, car l'embase de ces différents systèmes ne permet de simplifier que le passage de la sangle ventrale (qui est parfois remplacé par une fixation de type Isofix, par exemple dans les documents EP-830 972 et DE-101 04 137). En revanche, le maintien de la partie supérieure du dossier n'est soit pas prévu dans ces documents (bien qu'il soit nécessaire en pratique, sauf à prévoir des solutions alternatives pour lutter contre le basculement du siège en cas de choc, telle qu'une jambe d'appui), soit suppose toujours des passages de sangle distincts pour la sangle pectorale, selon que le fauteuil est placé dos à la route ou face à la route.

### 3. Objectif de l'invention

L'invention a notamment pour objectif de pallier ces inconvénients de l'art antérieur.

Plus précisément, un objectif de l'invention est de fournir un siège auto pouvant être utilisé, au choix, en configuration homologuée « groupe 1 », face à la route, ou en en configuration homologuée « groupe 0+ », dos à la route, et permettant de simplifier la fixation au siège du véhicule par rapport aux sièges auto de l'art antérieur, quelle que soit la position retenue.

Ainsi, un autre objectif de l'invention est de proposer un tel siège auto dans lequel les risques de mauvaises installations des sangles de ceinture de sécurité sont réduits, voire nuls, aussi bien dans une position « groupe 0+ », dos à la route, que dans une position « groupe 1 », face à la route.

Un autre objectif de l'invention est de mettre en oeuvre un tel siège qui reste simple à fabriquer et peu coûteux.

### 4. Résumé de l'invention

Ces objectifs, ainsi que d'autres qui apparaîtront par la suite, sont atteints à l'aide d'un siège auto pour enfant suivant les caractéristiques de la rev. 1.

Selon l'invention, ledit dossier présente, en sa partie supérieure, au moins un passage de sangle, destiné à recevoir une sangle pectorale d'une ceinture de sécurité d'un véhicule automobile, le ou lesdits passages de sangle étant configurés de façon à recevoir ladite sangle pectorale dans ladite position face à la route et dans ladite position dos à la route, et que ladite sangle pectorale circule dans tous les passages de sangle prévus sur ladite partie supérieure dudit dossier, dans ladite position face à la route et dans ladite position dos à la route, et au moins un indicateur est placé au voisinage de chacun desdits passages de sangle, le ou lesdits indicateurs indiquant que lesdits passages de sangles sont aptes à recevoir ladite sangle pectorale dans ladite position face à la route et dans ladite position dos à la route.

Ainsi, l'installation du siège est facilitée, quelle que soit sa position. En effet, l'utilisateur ne se pose pas de question sur les emplacements adéquats pour la sangle pectorale : il sait en effet que, dans tous les cas, tous les passages de sangle disponibles doivent être utilisés), de façon symétrique. Cette utilisation symétrique dans les deux positions permet d'éviter les risques de mauvaises installations, et donc d'améliorer la sécurité de l'enfant.

Selon un mode de réalisation préférentiel de l'invention, ladite partie supérieure du dossier présente deux passages de sangle placés respectivement sur les deux bords latéraux dudit dossier.

Ces passages sont des fentes traversant lesdits bords latéraux.

Cette approche présente l'avantage d'une bonne accessibilité, dans les deux positions, et d'une installation simple et intuitive.

Selon un mode de réalisation particulier, le ou lesdits passages de sangle présentent au moins deux zones distinctes, aptes chacune à recevoir en appui ladite sangle pectorale.

Dans ce cas, lorsqu'une sangle pectorale est mise en place, on peut prévoir que ladite sangle pectorale circule dans une première zone de la fente d'un premier desdits bords latéraux, et dans la seconde zone de la fente du second desdits bords latéraux.

On propose ainsi une installation efficace, et symétrique, réduisant le risque d'erreur, d'autant plus que, si les zones sont conçues de façon adéquate, la sangle tend à se placer dans les zones souhaitées.

Avantageusement, ladite sangle pectorale s'étend selon une direction horizontale, entre lesdits passages de sangle.

Dans le cas où les passages de sangle sont des fentes, celles-ci présentent avantageusement deux portions de fente, une portion d'entrée et une portion de fond, formant un angle non nul, et correspondant respectivement à la première et à la seconde zones.

Selon un aspect avantageux de l'invention, ladite portion d'entrée est sensiblement verticale et définit au moins une surface d'appui pour la partie de ladite sangle pectorale la plus proche de l'enrouleur de ladite sangle.

Cette portion d'entrée est préférentiellement renforcée de façon que ladite sangle pectorale puisse venir en appui sur ses deux lèvres, selon que ledit fauteuil est dans ladite position face à la route ou dans ladite position dos à la route.

En effet, selon la position du fauteuil, la sangle pectorale vient en appui sur l'une ou l'autre des lèvres de cette portion de fente.

Par ailleurs, ladite portion de fond est préférentiellement orientée vers l'arrière dudit dossier et définit une surface d'appui pour la partie de ladite sangle pectorale la plus éloignée de l'enrouleur de ladite sangle.

Selon un mode de réalisation particulier de l'invention, ledit fauteuil peut prendre deux positions d'assemblage par rapport à ladite embase, une position face à la route et une position dos à la route. Dans ce cas, ladite embase présente un passage de sangle ventrale unique.

Ainsi, le montage est simplifié, sans risque d'erreur, non seulement pour la sangle pectorale, mais également pour la sangle ventrale. En effet, tous les passages de sangle (globalement) sont utilisés.

Avantageusement, dans ce cas, ladite sangle ventrale, lorsqu'elle est placée dans ledit passage de sangle ventrale, s'étend parallèlement à la portion de sangle pectorale située entre lesdits passages de sangle pectorale.

Ledit passage de sangle ventrale peut notamment être formé sur la face inférieure, venant en contact avec le siège du véhicule, de ladite embase.

Selon un mode de réalisation, ladite embase présente une section biseautée, de façon à compenser au moins en partie l'inclinaison du siège dudit véhicule.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1 et 2, qui ont été commentées ci-dessus, représentent un siège auto de l'art antérieur installé dans un véhicule automobile, respectivement dans une position dos à la route et face à la route ;
- la figure 3 présente un exemple de siège auto selon l'invention, dans sa position face à la route, en vue de de côté ;
- la figure 4 présente le siège de la figure 3 dans une variante de position, dans laquelle l'assise est inclinée par rapport à l'embase ;
- la figure 5 présente le siège des figures 3 et 4 dans sa position dos à la route, en vue de côté ;
- les figures 6A et 6B illustrent la mise en place de la sangle pectorale sur chaque côté du siège des figures 3 à 5, dans la position face à la route ;
- les figures 7A et 7B illustrent la mise en place de la sangle pectorale sur chaque côté du siège des figures 3 à 5, dans la position dos à la route.

### 6. Description détaillée de l'invention

### 6.1 Rappel du principe de l'invention

L'invention concerne donc un siège auto réversible, pouvant être installé dans un véhicule face à la route ou dos à la route. Il comprend une embase et un fauteuil. Dans le mode de réalisation décrit par la suite, l'embase prend une position unique dans le véhicule, et le fauteuil peut prendre deux positions à 180° l'une de l'autre par rapport à l'embase. Cette embase peut être de tout type adapté. Selon un mode de réalisation particulier, décrit plus en détail par la suite, elle présente une section biseautée.

Dans ce cas particulier, l'embase formant la partie inférieure du siège auto définie un plan de référence non parallèle à la surface inférieure d'appui sur le siège du véhicule. Ce plan de référence permet de définir un axe de symétrie, perpendiculaire à ce plan.

Ainsi, une section de l'embase s'inscrit, de façon schématique, sensiblement dans un triangle, et plus exactement dans un trapèze. Ce trapèze comprend quatre côtés :
- un premier côté correspondant à la surface inférieure de l'embase, ou surface d'appui du siège auto sur l'assise du siège du véhicule ;
- un deuxième côté correspondant à la surface supérieure de l'embase, ou plus généralement au plan de référence, et qui n'est pas parallèle au premier côté ;
- un troisième côté, appelé bord épais ou première zone d'extrémité, correspondant à l'arrière de l'embase (zone proche du dossier du siège du véhicule), et reliant les premier et deuxième côtés ;
- un quatrième côté, appelé bord fin ou seconde zone d'extrémité, correspondant à l'avant de l'embase (zone éloignée du dossier du siège du véhicule), et reliant les premier et deuxième côtés. Ce quatrième côté présente une épaisseur inférieure au troisième côté.

Schématiquement, le quatrième côté, qui peut présenter une faible épaisseur, est assimilé par la suite à la pointe d'un triangle dans lequel s'inscrit le trapèze.

En position d'utilisation, cette embase est placée dans le véhicule de façon à ce que le bord épais de l'embase, ou première zone d'extrémité, soit placé sur l'arrière de l'assise du siège du véhicule, à proximité du dossier de celui-ci, et la pointe du triangle, correspondant au bord fin de l'embase, ou seconde zone d'extrémité, soit placé sur l'avant de l'assise du siège du véhicule. Ainsi, la partie supérieure de l'embase, ou deuxième côté, définit un plan proche de l'horizontale, et de préférence légèrement incliné vers l'avant du siège (et donc l'avant du véhicule).

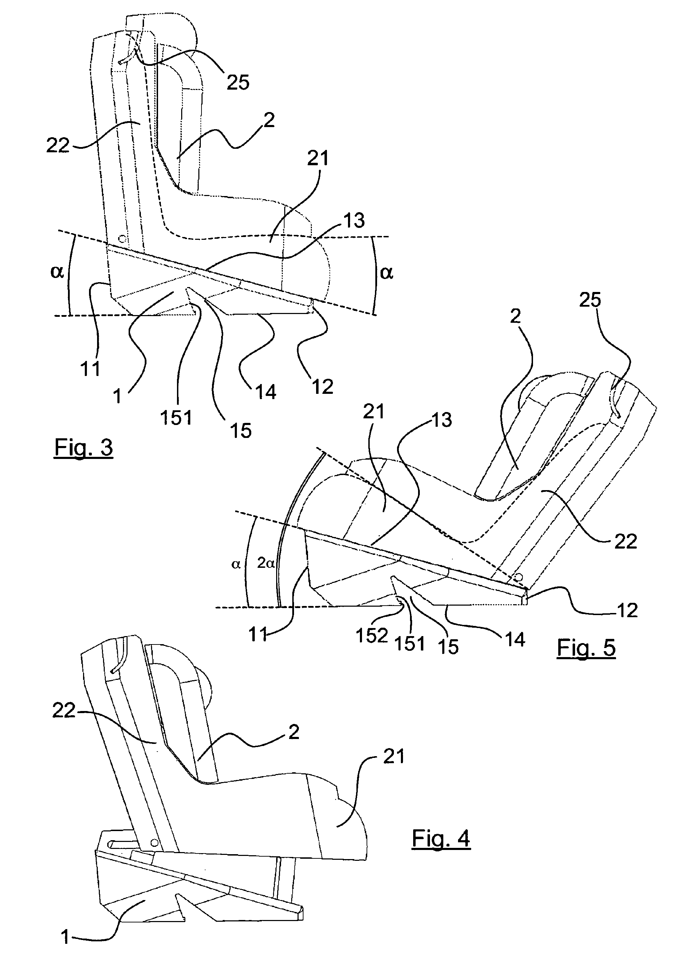

Le fauteuil peut être monté sur cette embase :
- soit dans une configuration « groupe 1 », destinée à être installée « face à la route » (appelée par simplification « position face à la route », ou « première position »), comme illustré par les figures 3 et 4 ;
- soit dans une configuration « groupe 0+ », destinée à être installée « dos à la route » (appelée par simplification « position dos à la route », ou « seconde position »), dans laquelle la position du fauteuil correspond à une symétrie axiale de sa position en configuration « groupe 1 », comme illustré par la figure 5.

L'embase reste dans les deux cas dans la même position, sans modification lorsqu'on passe de la configuration « groupe 0+ » à « groupe 1 » et vice-versa. Le bord épais reste toujours au voisinage du dossier du siège du véhicule.

Le plan de la surface supérieure de l'embase, ou plan de référence, formant un angle avec le plan de l'assise du siège du véhicule, ou plan de base (angle entre le premier et le deuxième côtés), l'axe de symétrie entre les deux positions du fauteuil forme le même angle avec la perpendiculaire au plan de l'assise du siège du véhicule. L'inclinaison du fauteuil du siège auto par rapport au plan de l'assise du siège du véhicule est en conséquence différente selon que le siège auto est en position « groupe 1 » ou en position « groupe 0+ ».

En outre, le fauteuil peut comprendre des moyens d'inclinaison de confort permettant de faire varier l'inclinaison de l'assise et/ou du dossier du fauteuil par rapport à ladite embase, les positions extrêmes étant illustrées respectivement par les figures 3 et 4. Ces moyens d'inclinaison sont de préférence actifs uniquement dans la position face à la route, des moyens de verrouillage empêchant l'utilisation des moyens d'inclinaison de confort dans la position dos à la route.

Plusieurs modes de solidarisation du fauteuil à l'embase sont envisageables. Par exemple, l'embase et le fauteuil peuvent être équipés d'éléments d'assemblage réversibles, permettant un assemblage dans les deux positions. Selon une autre approche, le fauteuil peut pivoter autour de l'axe de symétrie.

### 6.2 Exemple de mise en oeuvre

Les figures 3 à 5 présentent de façon plus détaillée un exemple de siège auto selon l'invention. Ce siège auto est donc composé d'un fauteuil 2 fixé sur une embase 1. L'embase 1 est la partie du siège auto qui est destinée à être placée sur l'assise du siège du véhicule automobile. Le fauteuil 2 est la partie du siège auto dans laquelle doit être installé l'enfant. Ce fauteuil 2 comprend notamment une assise 21 et un dossier 22.

L'embase 1 présente, dans le plan de symétrie du siège auto, une section de forme sensiblement triangulaire. Ainsi, elle présente une première zone d'extrémité, proche d'un de ses bords 11, dit bord épais, et correspondant à un côté du triangle défini ci-dessus, plus épaisse qu'une seconde zone d'extrémité, proche du bord opposé 12, dit bord fin, et correspondant sensiblement à la pointe du triangle opposée au bord 11. La surface supérieure 13 de cette embase (définissant le plan de référence) forme ainsi, dans le plan de symétrie du siège, un angle α (représenté sur les figures 3 et 5) avec la surface inférieure 14 de l'embase (définissant le plan de base). Cet angle α se retrouve sensiblement entre le plan de référence et le plan défini par l'assise du siège auto.

Le fauteuil 2 peut être monté sur l'embase 1 dans deux configurations. La première de ces configurations, dite « groupe 1 », est représentée par les figures 3 et 4. Dans cette configuration, l'avant de l'assise 21 du fauteuil 2 est placée au-dessus de la seconde zone d'extrémité de l'embase 1, et le dossier 22 du fauteuil 2 est placé au-dessus de la première zone d'extrémité de l'embase 1.

Cette configuration « groupe 1 » est prévue pour utiliser le siège auto en position « face à la route ». Ainsi, la surface inférieure 14 de l'embase 1 doit être placée contre l'assise du siège du véhicule automobile, et le bord épais 11 de l'embase 1 prend appui contre le bas du dossier de ce siège du véhicule automobile. L'angle que forme l'assise 21 par rapport à la surface inférieure de l'embase 14 est adapté pour que le siège, quand il est installé en position « face à la route » sur l'assise du véhicule présentant elle-même une inclinaison, offre une position assise à l'enfant.

La deuxième de ces configurations, dite configuration « groupe 0+ », est représentée sur la figure 5. Dans cette configuration, l'avant de l'assise 21 du fauteuil 2 est placé au-dessus la première zone d'extrémité de l'embase 1 et le dossier 22 du fauteuil 2 est placé au-dessus de la seconde zone d'extrémité de l'embase 1.

La position du fauteuil 2 dans la configuration « groupe 0+ » est symétrique à sa position dans la configuration « groupe 1 », par rapport à un axe perpendiculaire à la surface supérieure 13 de l'embase. La surface supérieure 13 de cette embase formant un angle α avec la surface inférieure 14 de l'embase, l'axe de symétrie forme le même angle α avec la perpendiculaire à la surface inférieure 14 de l'embase.

Cette configuration « groupe 0+ » est prévue pour une utilisation du siège auto pour enfant dans une position « dos à la route ». Dans cette configuration, l'angle que forme l'assise 21 du fauteuil 2 avec la surface de base, correspondant à la face inférieure 14 de l'embase est différent (d'un angle de 2α) de celui qu'elle forme dans la configuration représentée par la figure 3, permettant au siège auto, quand il est installé dans le véhicule dos à la route, d'offrir une position semi-allongée (ou semi-assise) à l'enfant.

Ainsi, dans la configuration « groupe 1 », le plan de base et le plan de l'assise 21 sont sensiblement parallèle, et forment donc un angle sensiblement égal à α - α = 0. Dans la configuration « groupe 0+ » en revanche, le plan de base et le plan de l'assise 21 forment un angle sensiblement égal à α + α = 2α.

Cette différence d'angle permet que l'angle d'assise du siège auto pour enfant soit optimal, aussi bien en « groupe 1 » dans la position « face à la route » qu'en « groupe 0+ » dans la position dos à la route, tout en compensant la propre inclinaison de l'assise du siège du véhicule.

Il est à noter qu'aucun réglage (notamment de l'inclinaison) autre que le changement de position du fauteuil 2 par rapport à l'embase 1 n'est à effectuer entre ces deux positions.

### 6.3 Fixation du siège auto au siège du véhicule : sangle ventrale

Dans les deux configurations d'utilisation du siège auto selon le mode de réalisation de l'invention illustré, l'embase 1 est prévue pour être placée dans la même position sur le siège du véhicule automobile. Ainsi, le côté épais 11 de cette embase 1 est, dans ces deux positions, proche du (et de préférence en contact avec le) bas du dossier du siège du véhicule automobile.

L'embase 1 peut ainsi présenter un seul système de fixation au siège du véhicule automobile, qui sera utilisé dans les deux configurations possibles du siège auto. Il y a en fait deux positions pour le fauteuil par rapport à l'embase, mais une unique position pour l'embase par rapport au siège du véhicule.

Ce système de fixation peut notamment être un passage de sangle unique. Le siège auto représenté sur les figures 3 à 5 est ainsi conçu pour être fixé au siège du véhicule par la ceinture de sécurité. Une fente de passage de sangle 15 s'étendant dans une direction horizontale sur toute la largeur de l'embase 1 est ménagée dans la surface inférieure 14 de l'embase et permet le passage de la sangle ventrale de la ceinture de sécurité au travers l'embase 1, la sangle ventrale prenant appui contre une surface 151 sensiblement verticale.

Avantageusement, la fente présente la forme d'une encoche, avec une ouverture d'introduction de la sangle plus large que le fond, pour faciliter l'introduction de la sangle. Une zone de retenue 152 peut être prévue au bord de la surface d'appui 151, au voisinage de l'ouverture de la fente, pour faciliter la mise en place et le maintien de la sangle ventrale. La surface d'appui 151 peut être légèrement inclinée par rapport à la verticale, le fond de la fente en direction du bord épais, toujours pour assurer le guidage et le maintien de la sangle.

Ainsi, lorsque la sangle ventrale est plaquée contre la surface d'appui 151 et tendue, la partie inférieure du siège auto est efficacement retenue.

Avantageusement, la fente se trouve sensiblement sous le dossier 22, lorsque le siège est en position face à la route.

L'invention peut également s'appliquer au cas d'une embase non biseautée, et le cas échéant réversible, par exemple en même temps que le fauteuil. Dans ce cas, préférentiellement, un seul passage de sangle ventrale est prévu, celui-ci étant conçu de façon à définir deux surfaces d'appui aptes chacune à recevoir la sangle ventrale, selon la position, dos à la route ou face à la route, de l'embase.

### 6.4 Fixation du siège auto au siège du véhicule : sangle pectorale

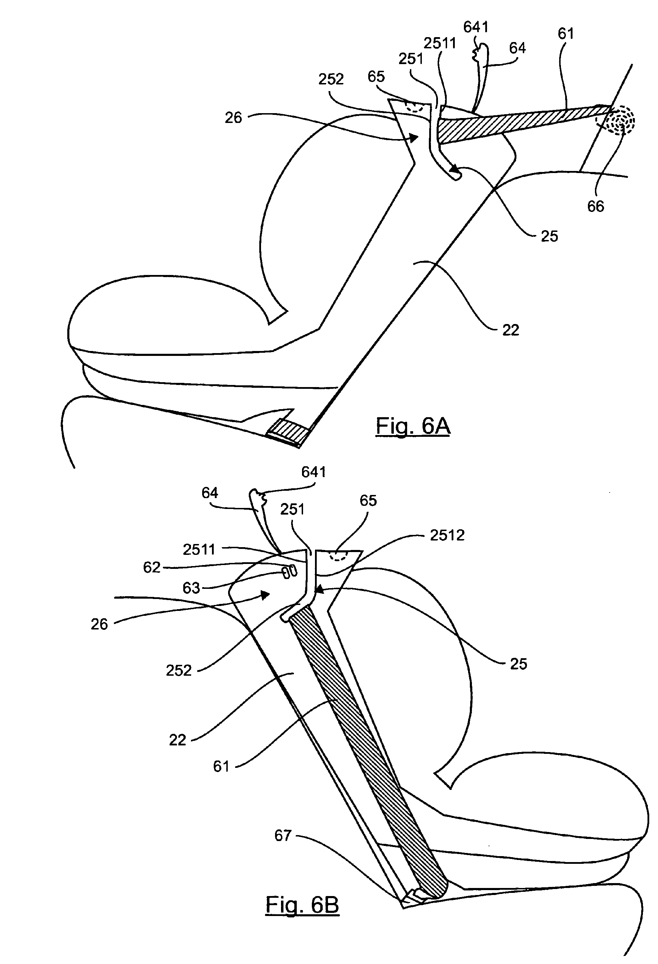

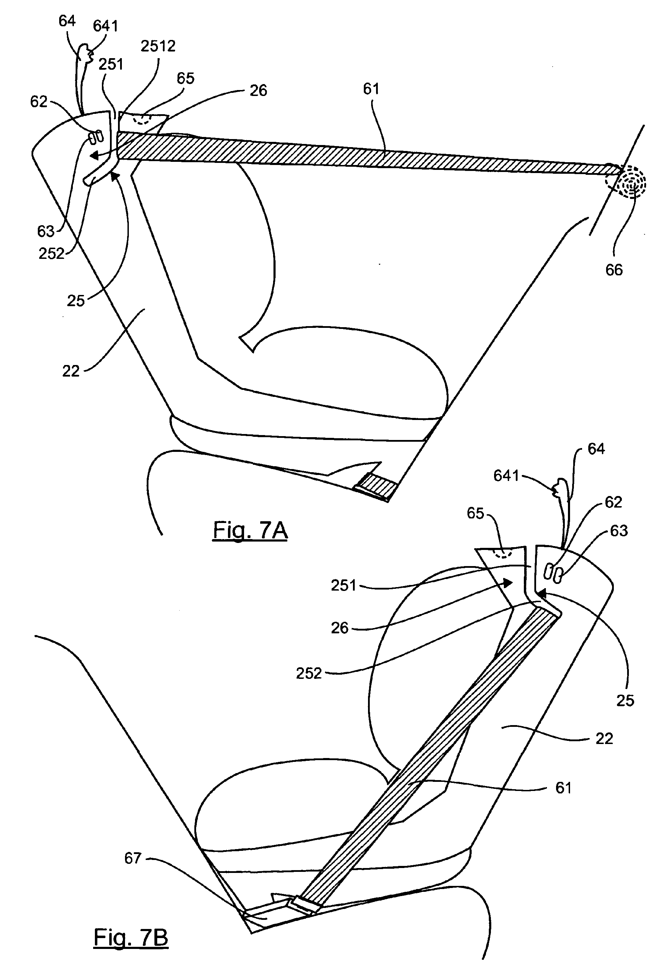

Selon l'invention, la partie supérieure du dossier 2 comprend, sur chacun de ces bords latéraux (s'étendant vers l'avant du siège), un passage de sangle 25, destiné à recevoir la sangle pectorale de la ceinture de sécurité du véhicule. Comme illustré par les figures 6A, 6B, 7A et 7B, ces deux passages de sangle sont conçus de façon à être utilisable dans les deux positions du fauteuil, face à la route ou dos à la route.

Ainsi, il n'y a que deux passages de sangle possibles quelle que soit la position du fauteuil, et ces deux passages de sangle doivent être utilisés, dans tous les cas. L'utilisateur ne doit donc plus se poser de question pour savoir quels sont les passages de sangle qu'il doit utiliser, ou ne pas utiliser selon la position du fauteuil. Il sait qu'il doit utiliser les deux passages disponibles.

Une fois l'installation effectuée, il ne reste aucun passage de sangle non utilisé et l'utilisateur ne se pose plus de question, et ne risque pas de réaliser des mises en place de la sangle dans de mauvais passages de sangle, qui peuvent conduire à des situations dangereuses pour la sécurité de l'enfant.

Du fait que les deux passages de sangle 25 sont systématiquement utilisés, la sangle s'étend selon une direction horizontale entre ces deux passages de sangle, au niveau de la partie supérieure du dossier. Ainsi, au niveau du siège, la sangle pectorale et la sangle ventrale s'étendent selon une direction horizontale, dans tous les cas.

Selon un mode de réalisation particulier, les deux passages de sangle peuvent être reliés par un tunnel ou une fente, dans lequel la sangle pectorale circule. Il peut également être prévu un élément de guidage et/ou de maintien de la sangle, entre les deux passages de sangle. Dans ce cas, cet élément de guidage et/ou de maintien est également systématiquement utilisé.

Les passages de sangle sont, dans le mode de réalisation illustré, des fentes traversant les bords latéraux 26 du dossier, s'étendant vers l'arrière du siège.

Plus précisément, les fentes présentent deux portions 251 et 252, formant un angle compris entre 90° et 160° :
- une portion d'entrée 251, permettant l'introduction de la sangle, et s'étendant de préférence sensiblement verticalement ;
- une portion de fond 252, dirigée de préférence vers l'arrière du fauteuil en partant de l'extrémité de la portion d'entrée 251.

Les deux portions de fentes 251 et 252 sont conçues pour définir plusieurs surfaces d'appui de la sangle pectorale. Plus précisément, quelle que soit la position, face à la route ou dos à la route, on utilise pour l'une des fentes une surface d'appui de la portion d'entrée 251, et pour l'autre des fentes une surface d'appui de la portion de fond 252.

Plus précisément encore, et comme cela apparaît sur les figures 6A (position face à la route) et 7A (position dos à la route), le bord latéral le plus proche de l'enrouleur 66 de la ceinture de sécurité, monté généralement sur la carrosserie du véhicule, et donc la plupart du temps le bord le plus proche d'une portière, reçoit la sangle pectorale 61 dans la portion d'entrée 251.

On notera que cette portion d'entrée 251 présente donc la caractéristique de définir deux surfaces d'appui, correspondant à chacune des lèvres, ou bords de la fente. En effet, dans la position face à la route (figure 6A), c'est le bord 2511 orienté vers l'arrière du fauteuil qui sert de surface d'appui, alors que dans la position dos à la route (figure 7A) c'est le bord 2512, orienté vers l'avant du fauteuil qui reçoit la sangle 61. Ceci suppose que cette portion de fente soit conçue et renforcée pour supporter les efforts appliqués par la sangle 61 dans les deux positions c'est-à-dire sur chacun des bords 2511 et 2512.

Sur l'autre côté du siège auto, illustré par les figures 6B et 7B et correspondant donc au côté le plus éloigné de l'enrouleur, généralement vers le milieu du véhicule, c'est en revanche la portion de fond 252 qui est utilisée pour recevoir et servir de surface d'appui à la sangle pectorale 61.

Ainsi, dans la position face à la route (figure 6B) la sangle 61 s'étend sensiblement parallèlement au dossier 2, pour être accroché classiquement au moyen de verrouillage 67 du véhicule.

Dans la position dos à la route (figure 7B) la sangle 61 forme un angle léger avec le dossier 2, pour s'étendre selon un axe sensiblement perpendiculaire à la portion de fond 252 de la fente 25.

Entre les deux fentes 25, la sangle circule sensiblement le long du dossier, ou selon un parcours prédéfini, mettant par exemple en oeuvre un déflecteur.

Du fait que le même passage de sangle 25 est utilisé dans les deux positions, le siège selon l'invention présente un marquage adapté selon lequel deux indicateurs distincts 62 et 63 sont placés à proximité de chaque passage de sangle 25, un premier indicateur 62 correspondant à l'identification d'un passage de sangle pour l'utilisation face à la route et un second indicateur 63 indiquant que le passage de sangle doit être utilisé également dos à la route.

Ici, ces deux indicateurs 62 et 63 peuvent être des éléments de couleur, par exemple bleu et rouge respectivement, selon la norme actuellement en vigueur.

Il peut également s'agir d'un indicateur unique, bicolore (par exemple un rond dont une moitié est rouge et l'autre bleue) ou toute mention adaptée, par exemple imprimée ou gravée, comprenant un texte ou un symbole adéquat pour préciser que les fentes 25 doivent être utilisées dans les deux positions.

Il est également possible, si une norme future le prévoit, de définir un indicateur normalisé, par exemple une troisième couleur autre que le rouge et le bleu, pour de tels passages de sangle dédiés aux deux positions.

Cet indicateur peut également être défini par les fentes elles-mêmes, dont les pièces plastiques ou au moins une partie d'entre elles, peuvent porter les couleurs ou autres indicateurs adéquats. Ces couleurs peuvent par exemple être apportées sur les différentes surfaces d'appui.

Ces indicateurs seront de préférence présents également sur les notices explicatives.

On notera, par ailleurs, que le siège de l'invention est équipé, selon le mode de réalisation illustré par les figures 6A à 7B d'éléments 64 permettant de fermer ou de libérer l'accès aux fentes 25. Ces éléments 64 sont ici montés mobiles en rotation par rapport au dossier 2, et présentent à leur extrémité des éléments 641 de clipsage, prévus pour coopérer avec une partie femelle 65 correspondante formée dans le dossier. Lorsqu'ils sont fermés, l'accès à la fente 25 est impossible et une sangle 61 déjà installée ne peut être retirée.

Pour installer, ou désinstaller, le siège, que ce soit pour le sortir du véhicule ou modifier la position face à la route ou dos à la route du fauteuil, il est nécessaire d'ouvrir ces éléments 64 pour sortir ou introduire la sangle pectorale 61. Lorsque l'installation est terminée, ces éléments 64 peuvent être refermés. Le fait que, en utilisation, ces éléments soient refermés est un indicateur du fait que l'installation a été correctement effectuée (sous réserve, bien sûr, que la sangle 61 soit présente dans les fentes 25).

## Revendications

1. Siège auto pour enfant, comprenant une embase (1) et un fauteuil (2), ledit fauteuil (2) comprenant une assise (21) et un dossier (22),
**caractérisé en ce que** ledit dossier (22) présente, en sa partie supérieure, au moins un passage de sangle (25), destiné à recevoir une sangle pectorale (61) d'une ceinture de sécurité d'un véhicule automobile,
le ou lesdits passages de sangle (25) étant configurés de façon à recevoir ladite sangle pectorale (61) dans ladite position face à la route et dans ladite position dos à la route, de façon que ladite sangle pectorale (61) doit circuler dans tous les passages de sangle (25) prévus sur ladite partie supérieure dudit dossier (22), dans ladite position face à la route et dans ladite position dos à la route,
et **en ce qu'**au moins un indicateur (62 ou 63) est placé au voisinage de chacun desdits passages de sangle (25), le ou lesdits indicateurs (62 ou 63) indiquant que lesdits passages de sangles (25) sont aptes à recevoir ladite sangle pectorale (61) dans ladite position face à la route et dans ladite position dos à la route.

2. Siège auto selon la revendication 1, **caractérisé en ce que** ladite partie supérieure du dossier (22) présente deux passages de sangle (25) placés respectivement sur les deux bords latéraux (26) dudit dossier (22).

3. Siège auto selon la revendication 2, **caractérisé en ce que** ladite sangle pectorale s'étend selon une direction horizontale, entre lesdits passages de sangle (25).

4. Siège auto selon l'une quelconque des revendications 1 à 3, **caractérisé en ce que** lesdits passages sont des fentes traversant lesdits bords latéraux (26).

5. Siège auto selon l'une quelconque des revendications 1 à 4, **caractérisé en ce que** le ou lesdits passages de sangle (25) présentent au moins deux zones distinctes, aptes chacun à recevoir en appui ladite sangle pectorale (61).

6. Siège auto selon les revendications 4 et 5, **caractérisé en ce que**, lorsqu'une sangle pectorale (61) est mise en place, ladite sangle pectorale (61) circule dans une première zone de la fente (25) d'un premier desdits bords latéraux (26), et dans la seconde zone de la fente (25) du second desdits bords latéraux (26).

7. Siège auto selon la revendication 6, **caractérisé en ce que** lesdites fentes présentent deux portions de fente (251, 252), une portion d'entrée (251) et une portion de fond (252), formant un angle non nul, et correspondant respectivement à la première et à la seconde zones.

8. Siège auto selon la revendication 7, **caractérisé en ce que** ladite portion d'entrée (251) est sensiblement verticale et définit au moins une surface d'appui pour la partie de ladite sangle pectorale (61) la plus proche de l'enrouleur (66) de ladite sangle.

9. Siège auto selon la revendication 8, **caractérisé en ce que** ladite portion d'entrée (251) est renforcée de façon que ladite sangle pectorale (61) puisse venir en appui sur ses deux lèvres, selon que ledit fauteuil (2) est dans ladite position face à la route ou dans ladite position dos à la route.

10. Siège auto selon l'une quelconque des revendications 7 à 9, **caractérisé en ce que** ladite portion de fond (252) est orientée vers l'arrière dudit dossier (22) et définit une surface d'appui pour la partie de ladite sangle pectorale (61) la plus éloignée de l'enrouleur (66) de ladite sangle.

11. Siège auto selon l'une quelconque des revendications 1 à 10, **caractérisé en ce que** ledit fauteuil (2) peut prendre deux positions d'assemblage par rapport à ladite embase (1), une position face à la route et une position dos à la route, et **en ce que** ladite embase (1) présente un passage de sangle ventrale unique.

12. Siège auto selon les revendications 3 et 11, **caractérisé en ce que** ladite sangle ventrale, lorsqu'elle est placée dans ledit passage de sangle ventrale, s'étend parallèlement à la portion de sangle pectorale située entre lesdits passage de sangle (25).

13. Siège auto selon les revendications 11 et 12, **caractérisé en ce que** ledit passage de sangle ventrale est formé sur la face inférieure, venant en contact avec le siège du véhicule, de ladite embase (1).

14. Siège auto selon l'une quelconque des revendications 11 à 13, **caractérisé en ce que** ladite embase (1) présente une section biseautée, de façon à compenser au moins en partie l'inclinaison du siège dudit véhicule.

## Claims

1. Car seat for a child, comprising a base (1) and a chair (2), the said chair (2) comprising a seat (21) and a backrest (22),
**characterised in that** the said backrest (22) has, at its upper part, at least one strap channel (25) which is intended to receive a pectoral strap (61) of a safety belt belonging to a motor vehicle,
the said strap channel or channels (25) being configured in such a way as to receive the said pectoral strap (61) in the said facing-forwards position and in the said facing-backwards position, in such a way that the said pectoral strap (61) has to pass through all the strap channels (25) provided on the said upper part of the said backrest (22), in the said facing-forwards position and in the said facing-backwards position,
and **in that** at least one indicator (62 or 63) is located in the vicinity of each of the said strap channels (25), the said indicator or indicators (62 or 63) indicating that the said strap channels (25) are capable of receiving the said pectoral strap (61) in the said facing-forwards position and in the said facing-backwards position.

2. Car seat according to claim 1, **characterised in that** the said upper part of the backrest (22) has two strap channels (25) which are respectively located on the two lateral edges (26) of the said backrest (22).

3. Car seat according to claim 2, **characterised in that** the said pectoral strap extends in a horizontal direction between the said strap channels (25).

4. Car seat according to any one of claims 1 to 3, **characterised in that** the said channels are slots that pass through the said lateral sides (26).

5. Car seat according to any one of claims 1 to 4, **characterised in that** the said strap channel or channels (25) have at least two distinct zones, each of which is capable of receiving the said pectoral strap (61) in a manner resting in it.

6. Car seat according to claims 4 and 5, **characterised in that**, when a pectoral strap (61) is placed in position, the said pectoral strap (61) passes through a first zone of the slot (25) in a first of the said lateral edges (26), and through the second zone of the slot (25) in the second of the said lateral edges (26).

7. Car seat according to claim 6, **characterised in that** the said slots have two slot portions (251, 252), an entry portion (251) and a bottom portion (252), which form an angle other than zero and respectively correspond to the first and second zones.

8. Car seat according to claim 7, **characterised in that** the said entry portion (251) is substantially vertical and defines at least one bearing surface for that part of the said pectoral strap (61) which is closest to the reel (66) of the said strap.

9. Car seat according to claim 8, **characterised in that** the said entry portion (251) is reinforced in such a way that the said pectoral strap (61) is able to rest on its two lips, according to whether the said chair (2) is in the said facing-forwards position or in the said facing-backwards position.

10. Car seat according to any one of claims 7 to 9, **characterised in that** the said bottom portion (252) is oriented towards the rear of the said backrest (22) and defines a bearing surface for that part of the said pectoral strap (61) which is furthest away from the reel (66) of the said strap.

11. Car seat according to any one of claims 1 to 10, **characterised in that** the said chair (2) is able to take two assembling positions in relation to the said base (1), a facing-forwards position and a facing-backwards position, and **in that** the said base (1) has a single ventral-strap channel.

12. Car seat according to claims 3 and 11, **characterised in that** the said ventral strap, when it is located in the said ventral-strap channel, extends parallel to that portion of the pectoral strap which is situated between the said strap channels (25).

13. Car seat according to claims 11 and 12, **characterised in that** the said ventral-strap channel is formed on the lower face, which comes into contact with the seat of the vehicle, of the said base (1).

14. Car seat according to any one of claims 11 to 13, **characterised in that** the said base (1) has a bevelled section, so as to compensate at least partly the inclination of the seat of the said vehicle.

## Patentansprüche

1. Autokindersitz, der einen Sockelteil (1) und einen Sessel (2) aufweist, wobei der besagte Sessel (2) einen Sitz (21) und eine Rückenlehne (22) aufweist,
**dadurch gekennzeichnet, dass** die besagte Rückenlehne (22) am oberen Teil mindestens einen Gurtdurchgang (25) aufweist, der den Brustgurt (61) eines PKW-Sicherheitsgurtes aufnehmen soll,
wobei der Gurtdurchgang (25) bzw. die Gurtdurchgänge (25) derart ausgebildet ist bzw. sind, dass er/sie den Brustgurt (61) in der Position in Fahrtrichtung und in der Position in Gegenfahrtrichtung so aufnimmt/aufnehmen, dass der besagte Brustgurt (61) durch alle Gurtdurchgänge (25) laufen muss, die am oberen Teil der besagten Rückenlehne (22) angebracht sind, sowohl in der besagten Position in Fahrtrichtung , als auch in der Position in Gegenfahrtrichtung und,
dass mindestens ein Indikator (62 oder 63) in der Nähe einer jeden der besagten Gurtdurchgänge (25) angebracht ist, wobei der/die Indikator(en) (62 oder 63) anzeigt/anzeigen, dass die besagten Gurtdurchgänge (25) zur Aufnahme der Brustgurt (61) in der besagten Position in Fahrtrichtung oder in der besagten Position in Gegenfahrtrichtung geeignet sind.

2. Autositz nach Anspruch 1, **dadurch gekennzeichnet, dass** der besagte obere Teil der Rückenlehne (22) zwei Gurtdurchgänge (25) aufweist, die jeweils an den zwei Seitenrändern (26) der besagten Rückenlehne (22) angebracht sind.

3. Autositz nach Anspruch 2, **dadurch gekennzeichnet, dass** der besagte Brustgurt in horizontaler Richtung zwischen den besagten Gurtdurchgängen (25) verläuft.

4. Autositz nach einem der Ansprüche 1 bis 3, **dadurch gekennzeichnet, dass** die besagten Durchgänge Schlitze sind, die durch die besagten Seitenrändern (26) gehen.

5. Autositz nach einem der Ansprüche 1 bis 4, **dadurch gekennzeichnet, dass** der besagte Gurtdurchgang (25) bzw. die besagten Gurtdurchgänge (25) mindestens zwei unterschiedliche Bereiche aufweist bzw. aufweisen, die jeweils geeignet sind, den besagten Brustgurt (61) zu stützen.

6. Autositz nach den Ansprüchen 4 und 5, **dadurch gekennzeichnet, dass** wenn ein Brustgurt (61) angelegt wird, dieser Brustgurt (61) durch einen ersten Bereich des Schlitzes (25) eines ersten der besagten Seitenränder (26) und durch den zweiten Bereich des Schlitzes (25) des zweiten der besagten Seitenränder (26) verläuft.

7. Autositz nach Anspruch 6, **dadurch gekennzeichnet, dass** die besagten Schlitze zwei Schlitzteile (251, 252), einen Eingangsteil (251) und einen Bodensteil (252) aufweisen, die einen Winkel bilden, der nicht null ist, wobei die Schlitzteile jeweils dem ersten und dem zweiten Bereich entsprechen.

8. Autositz nach Anspruch 7, **dadurch gekennzeichnet, dass** der besagte Eingangsteil (251) in etwa vertikal steht und mindestens eine Stützfläche für den Teil des besagten Brustgurtes (61) bildet, die am nächsten zum Aufrollmechanismus (66) des besagten Gurtes liegt.

9. Autositz nach Anspruch 8, **dadurch gekennzeichnet, dass** der besagte Eingangsteil (251) so verstärkt ist, dass der besagte Brustgurt (61) sich auf die zwei Ränder der Eingangsteil abstützen kann, je nachdem ob der besagte Sessel (2) sich in der besagten Position in Fahrtrichtung oder in der besagten Position in Gegenfahrtrichtung befindet.

10. Autositz nach einem der Ansprüche 7 bis 9, **dadurch gekennzeichnet, dass** der besagte Bodensteil (252) zum hinteren Teil der besagten Rückenlehne (22) hin ausgerichtet ist und eine Stützfläche für den Teil des besagten Brustgurtes (61) bildet, der sich am entferntesten vom Aufrollmechanismus (66) des besagten Gurtes befindet.

11. Autositz nach einem der Ansprüche 1 bis 10, **dadurch gekennzeichnet, dass** der besagte Sessel (2) zwei Montagepositionen gegenüber dem besagten Sockelteil (1) einnehmen kann, eine Position in Fahrtrichtung und eine Position in Gegenfahrtrichtung und, dass der besagte Sockelteil (1) einen einzigen Durchgang für einen Bauchgurt aufweist.

12. Autositz nach den Ansprüchen 3 und 11, **dadurch gekennzeichnet, dass** der besagte Bauchgurt sich, wenn er im besagten Durchgang für den Bauchgurt eingelegt ist, parallel zum Teil des Brustgurtes erstreckt, der sich zwischen den besagten Gurtdurchgängen (25) befindet.

13. Autositz nach den Ansprüchen 11 und 12, **dadurch gekennzeichnet, dass** der besagte Bauchgurtdurchgang auf der unteren Fläche, die in Kontakt mit dem Fahrzeugsitz steht, des besagten Sockelteils (1) ausgebildet ist.

14. Autositz nach einem der Ansprüche 11 bis 13, **dadurch gekennzeichnet, dass** der besagte Sockelteil (1) einen abgeschrägten Bereich aufweist, um die Neigung des Fahrzeugsitzes zumindest teilweise auszugleichen.
